# EUROPEAN PATENT APPLICATION

(11) **EP 3 588 748 A1**
(43) Date of publication of application: **01.01.2020**
(21) Application number: 18180944.3
(22) Date of filing: 29.06.2018
(51) Int. Cl.: H02K 5/06, H02K 5/24, H02K 9/08, H02K 5/18

(54) **A TWO-POLE TEFC ELECTRIC MOTOR AND AN ELECTRIC MOTOR DRIVE ARRANGEMENT**

(71) Applicant: ABB Schweiz AG, 5400 Baden (CH)
(72) Inventor: MATTILA, Simo, 00380 Helsinki (FI); AARNIVUO, Samu, 00380 Helsinki (FI); KOSONEN, Jani, 00380 Helsinki (FI)
(74) Representative: Boco IP Oy Ab

(57) **Abstract**

A two-pole TEFC (totally enclosed, fan- cooled) electric motor is concerned. A housing (1) of the motor as an inner space (1a), into which a stator assembly, a motor shaft and a rotor assembly fixed to and surrounding the motor shaft is fitted. A mounting foot structure (2) radially protrudes from the outer surface of the housing (1) for mounting said induction motor to a planar base structure. The mounting foot structure (2) comprises four mounting points (2a, 2b, 2c, 2d) defining corner points of a rectangular mounting footprint of the motor, such that the rectangular mounting foot print has two opposite sides parallel with the motor shaft. Furthermore, the mounting foot structure (2) comprising at least an additional mounting point (2e, 2f) positioned on each side of the mounting footprint parallel with the motor shaft, between the corner points of the mounting footprint.

## Description

### FIELD OF THE DISCLOSURE

The present disclosure relates to electric two-pole electric motors. More particularly, the present disclosure concerns electric motors of the TEFC (totally enclosed, fan-cooled) - type. In addition, an electric motor drive arrangement is concerned.

### BACKGROUND OF THE DISCLOSURE

Electric motors of the TEFC -type are well known and commonly used in a wide range of end-use applications. Particularly, such motors are enclosed so that surrounding air is not permitted to circulate within the motor housing, resulting in a robust structure. In order to provide sufficient cooling for such motors, an external fan, often provided on the motor shaft, is arranged to blow cooling air along the outer circumference of the motor housing, which is typically provided with cooling ribs. As excess heat is transferred through the motor housing, it is generally considered desirable to reserve as much of the motor housing's surface area for heat transfer as possible. Moreover, it is generally equally desirable to maintain the flow path of the cooling air on the outer surface of the motor housing as unobstructed as possible.

Two-pole arrangements are typically used in end use applications where high speed is required, because a higher rotation speed is obtained with two-pole configuration as compared to four-pole configurations at a given feed frequency. However, in two-pole arrangements, the weight distribution of the rotor is not as uniform along the circumference thereof, as compared to other configurations.

Certain standards, such as the API 541 and Shell DEP 33.66.05.31 define limits regarding vibration, such as separation margins between the frequencies of the operational vibration and the natural frequencies of electric motors during operation, particularly in end-use applications related to the petroleum industry. Moreover, it has been found that for frame sizes 400 and above, two-pole TEFC motors struggle to meet such separation margins, particularly at a vibration frequency range near twice the feed frequency.

Multiple factors contribute to the problem. Firstly, operational vibration of the electric motor, i.e. the rotation of the relatively heavy two-pole rotor and electrical excitation, exhibits a frequency range near twice the feed frequency. Moreover, conventional electric motors of the problematic frame sizes have been found to exhibit natural frequencies excited near the frequency range of twice the typical 50 Hz and 60 Hz feed frequencies of mains power. Consequently, such motors tend to accentuate vibration at frequency range near twice the feed frequency, leading to unsatisfactory vibration characteristics, particularly insufficient separation margins.

It has now been found, that the problematic vibration excites a global rolling mode of the electric motor. That is, the problematic vibration is not local deformation of the motor, but the motor housing vibrates as a whole. Consequently, the vibration issues cannot be addressed by making the motor housing more rigid, which has been the conventional way of addressing issues related to vibration.

Excessive global rolling mode vibrations may be addressed, for example by strengthening the mounting foot structure, and particularly by increasing its cross-sectional area and interface surface with the motor housing. Alternatively, additional supports attached to the motor housing or increasing the distance between each separate foot of the mounting foot structure may be considered. However, these solutions disturb airflow over the cooling ribs on the outer surface of the motor housing by reducing the cross-sectional flow area along which the cooling air flows. Additionally, the outer surface area of the motor housing contributing to heat transfer into the surrounding environment is reduced, thereby substantially impairing cooling properties of the motor. As TEFC-motors rely solely on heat transfer through the motor housing for cooling, these are not ideal solutions.

### BRIEF DESCRIPTION OF THE DISCLOSURE

An object of the present disclosure is to provide a two-pole TEFC (totally enclosed, fan-cooled) electric motor with improved vibrations characteristics, while still maintaining sufficient heat transfer through the motor housing in order to cool the motor during operation. It is a further object to provide an associated electric motor drive arrangement.

The objects of the disclosure are achieved by the two-pole TEFC electric motor and the electrical motor drive arrangement, which are characterized by what is stated in the independent claims. The preferred embodiments of the disclosure are disclosed in the dependent claims.

The solutions provided by the present disclosure avoids the drawbacks of the conventional approaches. Particularly, a two-pole TEFC (totally enclosed, fan-cooled) electric motor with improved vibrations characteristics is achieved, without trading off cooling capabilities of the motor. Improved vibration characteristics are achieved even for larger frame sizes, for which rigorous vibration requirements, such as those defined in the API / SHELL standards, have previously proven challenging to meet.

### BRIEF DESCRIPTION OF THE DRAWINGS

In the following, the disclosure will be described in greater detail by means of preferred embodiments with reference to the accompanying drawings, in which:
Fig. 1 illustrates a schematic representation of a housing of an electric motor according to an embodiment of the present disclosure as seen as a perspective view, and
Fig. 2 illustrates a schematic representation of the motor housing of Fig. 1 as seen from a plane view from the direction of the mounting footprint.

### DETAILED DESCRIPTION OF THE DISCLOSURE

According to a first aspect of the disclosure, a two-pole TEFC (totally enclosed, fan-cooled) electric motor is provided. Preferably, but not necessarily, the motor is an induction motor.

The motor comprises a housing 1 having an inner space 1a, a stator assembly arranged annularly within the inner space of the housing, a motor shaft rotatably supported so as to concentrically extend through the stator assembly, and a rotor assembly fixed to and surrounding the motor shaft within the inner space, the rotor assembly being disposed concentrically with and inside the stator assembly. Preferably, but not necessarily, the housing 1 is a cast housing, at least in part.

The motor further comprises a mounting foot structure 2 protruding radially from the outer surface of the housing 1 for mounting said motor to a planar base structure. The mounting foot structure 2 comprises four mounting points 2a, 2b, 2c, 2d defining corner points of a rectangular mounting footprint of the motor, such that the rectangular mounting foot print has two opposite sides parallel with the motor shaft. Preferably, but not necessarily, the mounting foot structure 2 is an integral part of a cast housing. Preferably, but not necessarily, the mounting foot structure 2 may be provided as two separate mounting feet protruding radially from the outer surface of the housing, extending parallel with motor shaft.

Particularly, the mounting foot structure 2 further comprises at least an additional mounting point 2e, 2f positioned on each side of the mounting footprint parallel with the motor shaft, between the corner points 2a, 2b, 2c, 2d of the mounting footprint. That is, at least six mounting points in total are provided. For example, the mounting point may be provided as openings, through which the motor is bolt-mounted to the base structure, although other arrangements for providing the mounting points may be provided.

It has surprisingly been found, that these additional mounting points 2e, 2f provide for a mounting of the motor that is capable of shifting the natural frequency of the global rolling mode away from the frequency range near twice the feed frequency typically used in mains power, without having an adverse effect on the cooling of the motor. That is, a two-pole TEFC motor that does not accentuate vibration at a frequency range near twice the feed frequency of mains power is achieved without reducing the surface area of the motor housing contributing to heat transfer or impairing airflow along the motor housing. That is, the separation margin between the frequencies of the operational vibrations of the motor and its natural frequencies is increased.

In an embodiment according to the first aspect of the present disclosure, the distance between the mounting footprint and the motor shaft is at least between 355 - 560 mm. That is, the frame size is at least 355 - 560.

The solution according to the present disclosure is advantageous for two-pole TEFC electric motors of the frame size 355 and above. This is because it has been observed that accentuation of vibrations at a frequency range near twice the feed frequency is less prominent in smaller frame sizes.

The solution according to the present disclosure is particularly advantageous for two-pole TEFC electric motors of the frame size 400 and above. This is because, in practise, it has been found that vibration related requirements, particularly sufficient separation margins between the frequencies of operational vibrations and the natural frequencies of the motor, may be met more easily in smaller frame sizes, even without additional measures. However, even for two-pole TEFC electric motors of smaller frame sizes, the solution according to the present disclosure increases the separation margin.

However, a total of six mounting points 2a, 2b, 2c, 2d, 2e, 2f have been found to meet vibration requirements, particularly separation margins indicated in certain standards up to the frame size 450, although vibration characteristics are improved to some extent even in larger frame sizes.

In an embodiment according to the first aspect of the present disclosure, the mounting foot structure 2 comprises at least two additional mounting points positioned on each side of the mounting footprint parallel with the motor shaft, between the corner points. That is, at least eight mounting points in total are provided. Exactly eight mounting points have been found to meet vibration requirements, particularly separation margins indicated in certain standards up to the frame size 500, although vibration characteristics are improved to some extent even in larger frame sizes.

In still another embodiment according to the of the present disclosure, the two-pole TEFC electric motor has a rotor length of 300 - 1070 mm and a rotor weight of 320 - 1570 kg, i.e. the combined length and weight of the motor shaft and the rotor assembly. It has been found, that in practice, additional mounting points, as discussed above, have been particularly advantageous for improving vibration characteristics for such two-pole TEFC electric motors, as such motors tend to exhibit natural frequencies of the global rolling mode at a frequency range resulting in an insufficient separation margin from the frequency range of the operational vibrations.

Moreover, for a frame size of 355, motors having a rotor length of 300 - 620 mm and a rotor weight of 320 - 510 kg have been found to particularly benefit from additional mounting points, as discussed above. For a frame size of 400, motors having a rotor length of 400 - 780 mm and a rotor weight of 540 - 750 kg have been found to particularly benefit from additional mounting points, as discussed above. For a frame size of 450, motors having a rotor length of 550 - 900 mm and a rotor weight of 830 - 1130 kg have been found to particularly benefit from additional mounting points, as discussed above. For a frame size of 500, motors having a rotor length of 600 - 1070 mm and a rotor weight of 1100 - 1570 kg have been found to particularly benefit from additional mounting points, as discussed above. Again, in the context of this disclosure, the terms rotor length and rotor weight refer to the length and weight, respectively, of the motor shaft and rotor assembly together.

In a further embodiment according to the first aspect of the present disclosure, the mounting foot structure 2 comprises two separate mounting feet, each protruding radially from the outer circumference of the housing 1 and extending in a direction parallel with the motor shaft.

Preferably, but not necessarily, a mounting base may be provided for each mounting point 2a-2f, such that the mounting bases extend further towards the base structure than the rest of the mounting foot structure 2, when in use. Preferably, but not necessarily, such mounting bases are of an equal size with respect to each other. For example, such mounting bases occupy an area of approximately 20cm by 20cm of the mounting footprint. Preferably, but not necessarily, each of the mounting points 2a-2f are provided as an opening extending through the respective mounting base. Suitably, the mounting point 2a-2d defining the corner points of the mounting footprint are provided on their respective mounting bases offset from the center thereof, towards the outer edge of the mounting footprint, whereas the additional mounting points 2e, 2f are provided centrally on their respective mounting bases.

Preferably, but not necessarily, the mounting foot structure 2 comprises stiffener portions provided between adjacent mounting points 2a, 2e, 2b, for improving rigidness of the mounting foot structure itself. Such stiffener portions may be provided, for example, as portions of the mounting feet having an increased thickness. Moreover, such stiffeners do not need to have a uniform thickness, but may be provided with shape, such as a frusto-pyramidal shape. Furthermore, stiffeners advantageously extend from one mounting base to another.

In a further embodiment according to the first aspect of the present disclosure, the two-pole TEFC motor has a maximum operating speed of 3000 rpm for a 50 Hz feed frequency, or alternatively 3600 rpm for a 60 Hz feed frequency, correspondingly. These correspond to rotating speeds of typical two-pole TEFC electric motors operated without a VFD (variable frequency drive), i.e. at a feed frequency of typical mains power.

Additional mounting points, as discussed above, are considered particularly advantageous for improving vibration characteristics in these operating speed ranges, as they correspond to frequency ranges at which the natural frequency of the global rolling mode has previously been exhibited with conventional motors.

In still a further embodiment according to the first aspect of the present disclosure, the two-pole TEFC motor has a nominal maximum output power of at least 200-1500 kW.

It has been found, that in practice, additional mounting points, as discussed above, have been particularly advantageous for improving vibration characteristics in such a power range. According to a second aspect of the present disclosure, an electric motor drive arrangement is provided. The motor drive arrangement comprises an AC power supply having a nominal output frequency of 50-60 Hz and the two-pole TEFC electric motor according to the first aspect of the present disclosure.

Suitably, the electric motor is operationally coupled to the power supply so as to be driven. It should be noted, that any single embodiment or a combination of embodiments, including variants thereof, of the first aspect may be used.

Preferably, but not necessarily, the power supply is mains power.

In an embodiment according to the second aspect of the present disclosure, the power supply has a nominal maximum power output of at least 200-1500 kW.

It has been found, that in practice, additional mounting points, as discussed above, have been particularly advantageous for improving vibration characteristics in these power ranges.

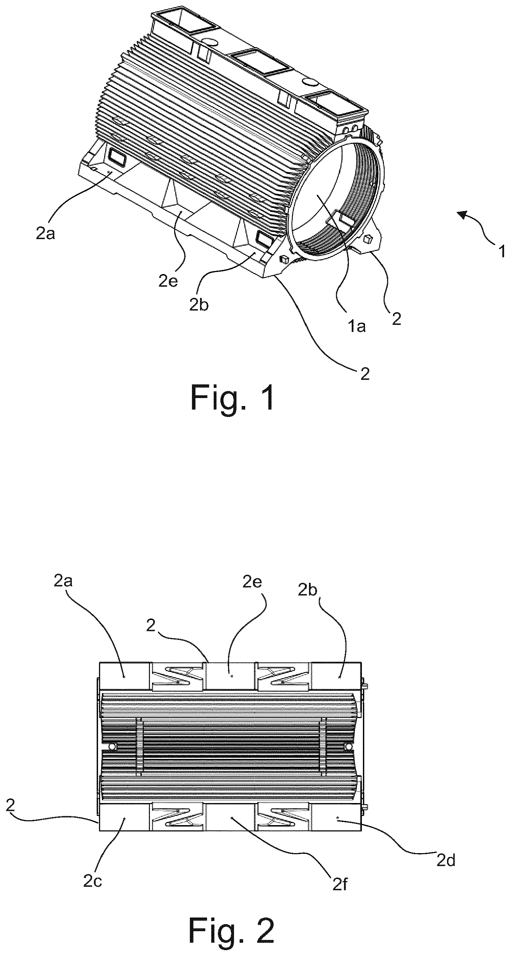

Fig. 1 illustrates a housing 1 of a two-pole TEFC electric motor according to the present disclosure. Particularly, the housing 1 has an inner space 1a into which a stator assembly, motor shaft assembly and a rotor assembly may be fitted any suitable manner known to the skilled person.

Radially extending cooling ribs are provided on the outer circumference of the housing 1 for improving heat transfer from the motor housing to the surroundings thereof. Moreover, a mounting foot structure 2 is provided as radially protruding from the outer surface of the housing 1. In the embodiment of Fig. 1 the mounting foot structure 2 comprises two separate mounting feet, each protruding radially from the outer circumference of the housing 1 and extending in a direction parallel with the motor shaft (not shown). However, other configurations for the mounting foot structure 2 are conceivable.

Positions of the mounting points 2a, and 2b, defining two of the four corner points of a rectangular mounting footprint of the motor, are indicated with a cross. Typically, mounting points are provided as through-holes or other openings enabling a mounting bolt being fitted therethrough, although other configurations are conceivable. Between the mounting points 2a, 2b, an additional mounting point 2e is provided. Between adjacent mounting points 2a, 2e, 2b, stiffener portions are provided for improving rigidness of the mounting foot structure itself. Such stiffener portions may be provided, for example, as portions of the mounting feet having an increased thickness. Moreover, such stiffeners do not need to have a uniform thickness but may be provided with shape. For example, Fig. 1 show stiffeners of a frusto-pyramidal shape.

Furthermore, as shown in Fig. 1, each of the separate mounting feet of the mounting foot structure 2 may comprise a mounting base for each mounting point 2a-2f, said mounting bases extending further towards the mounting foot print than rest of the mounting foot. That is, the 2-pole TEFC electric motor will be in contact with the base structure, to which the motor is attached, only by such mounting bases. The mounting points 2a - 2f may consequently be provided as through-holes extending through respective mounting bases. Furthermore, stiffeners, as discussed above, advantageously extend from one mounting base to another.

Fig. 2 illustrates a plan view seen from the bottom, i.e. from a direction of the mounting foot print. Fig. 2 more clearly illustrates the mounting points 2a, 2b, 2c, 2d defining the rectangular mounting footprint of the motor, and the additional mounting points 2e, 2f positioned on each side of the mounting footprint parallel with the motor shaft, between the corner points.

Also more clearly seen in Fig. 2, is the mutually equal size of the mountings bases. Although a rectangular shape of the mounting bases is illustrated, other shapes may be provided. Preferably, but not necessarily, each of the mounting points 2a-2f are provided as an opening extending through the respective mounting base. In the embodiment of Fig. 2, the mounting points 2a-2f are positioned centrally on their respective mounting base, although other configurations are conceivable. For example, the mounting points 2a-2d defining the corner points of the mounting footprint may be provided on their respective mounting bases offset from the center thereof, towards an outer edge of the mounting footprint, while additional mounting points 2e, 2f may be provided centrally on their respective mounting bases.

As described above, even two or more additional mounting points may be positioned between the corner points 2a, 2b, in which case a stiffener portion between each adjacent mounting point is preferably provided.

## Claims

1. A two-pole TEFC (totally enclosed, fan- cooled) electric motor, comprising:
- a housing (1) having an inner space (1a);
- a mounting foot structure (2) radially protruding from the outer surface of the housing (1) for mounting said motor to a planar base structure;
- a stator assembly arranged annularly within the inner space of the housing;
- a motor shaft rotatably supported so as to concentrically extend through the stator assembly, and
- a rotor assembly fixed to and surrounding the motor shaft within the inner space, the rotor assembly being disposed concentrically with and inside the stator assembly,
wherein the mounting foot structure (2) comprises four mounting points (2a, 2b, 2c, 2d) defining corner points of a rectangular mounting footprint of the motor, such that the rectangular mounting foot print has two opposite sides parallel with the motor shaft,
**characterized by** the mounting foot structure (2) further comprising at least an additional mounting point (2e, 2f) positioned on each side of the mounting footprint parallel with the motor shaft, between the corner points of the mounting footprint.

2. The electric motor according to Claim 1, **characterized by** the mounting foot structure (2) comprising at least two additional mounting points positioned on each side of the mounting footprint parallel with the motor shaft, between the corner points.

3. The electric motor according to Claim 1 or 2, **characterized in that** the distance between the mounting footprint and the motor shaft is at least between 355 - 560 mm.

4. The electric motor according to any of the preceding Claims 1-3, **characterized in that** the motor shaft and the rotor assembly have a length of 300 - 1070 mm and a weight of 320 - 1570 kg.

5. The electric motor according to any of the preceding Claims 1-4, **characterized in that** the mounting feet structure (2) comprises two separate mounting feet, each protruding radially from the outer circumference of the housing (1) and extending in a direction parallel with the motor shaft.

6. The electric motor according to any of the preceding Claims 1-5, **characterized in that** a mounting base may be provided for each mounting point (2a-2f), such that the mounting bases extend further towards the base structure than the rest of the mounting foot structure (2), when in use.

7. The electric motor according to any of the preceding Claims 1-6, **characterized in that** the mounting foot structure 2 comprises stiffener portions provided between adjacent mounting points (2a, 2e, 2b),

8. The electric motor according to any of the preceding Claims 1-7, **characterized by** having a maximum operation speed of at least 3000 - 3600 rpm

9. The electric motor according to any of the preceding Claims 1-8, **characterized by** having a nominal maximum output power of at least 200-1500 kW

10. An electric motor drive arrangement, comprising an AC power supply having a nominal output frequency of 50-60 Hz, **characterized by** further comprising the electric motor according to any of the preceding Claims 1-9 operationally coupled to the power supply.

11. The electric motor drive arrangement according to Claim 10, **characterized by** the power supply having a nominal maximum power output of at least 200-1500 kW.
